# EUROPÄISCHE PATENTANMELDUNG

(11) **EP 2 674 581 A1**
(43) Veröffentlichungstag der Anmeldung: **18.12.2013**
(21) Anmeldenummer: 12172185.6
(22) Anmeldetag: 15.06.2012
(51) Int. Cl.: F01K 13/02, F22B 35/18, G05B 13/02, F03D 11/00, F16H 57/00

(54) **Maschinenkomponente eines Antriebsstrangs sowie Verfahren zur Auslegung und/oder zur Inbetriebnahme und/oder zum Betreiben eines solchen Antriebsstrangs**

(71) Anmelder: Siemens Aktiengesellschaft, 80333 München (DE)
(72) Erfinder: Reimers, Jan-Dirk, 52074 Aachen (DE); Klein-Hitpass, Arno, 52074 Aachen (DE); Dinter, Ralf Martin, Dr., 45888 Gelsenkirchen (DE)

(57) **Zusammenfassung**

Maschinenkomponente eines Arbeitstrangs, die nicht über eine Steuereinheit Steuerbar ist, sowie ein Verfahren zur Auslegung und/oder zur Inbetriebnahme und/oder zum Betreiben eines Antriebsstrangs (2) einer Maschine (1), der mittels einer Steuereinheit (9) steuerbare Maschinenkomponenten (3, 4) und nicht steuerbare Maschinenkomponenten (5-8) aufweist, wobei das Verfahren die Schritte aufweist:
- Ausstatten wenigstens eines Teils der nicht steuerbaren Maschinenkomponenten (5-8) mit komponentenspezifischen Datenspeichern (12-15), auf denen jeweils konstruktionsbedingte technische Daten der nicht steuerbaren Maschinenkomponente (5-8) gespeichert sind, die für die Steuerung einer oder mehrerer steuerbarer Maschinenkomponenten (3, 4) relevant sind;
- Übermitteln der auf den Datenspeichern (12-15) gespeicherten Daten an die Steuereinheit (9) und
- Steuern einer oder mehrerer steuerbarer Maschinenkomponenten (3, 4) unter Einsatz der Steuereinheit (9) und unter Berücksichtigung der übermittelten Daten.

## Beschreibung

Die vorliegende Erfindung bezieht sich auf ein Verfahren zur Auslegung und/oder zur Inbetriebnahme und/oder zum Betreiben eines Antriebsstrangs einer Maschine, der steuerbare Maschinenkomponenten und nicht steuerbare Maschinenkomponenten aufweist und mit einer Steuereinheit verbunden ist, sowie auf eine Maschinenkomponente eines Antriebsstrangs.

Die Auslegung, die Inbetriebnahme und letztendlich auch das Betreiben von Antriebssträngen größerer Maschinen, wie beispielsweise generatorisch arbeitende Energieerzeugungsmaschinen oder Wärme-, Kraft- und Arbeitsmaschinen, beinhalten als technische Herausforderung immer den Schritt der Synthetisierung der einzelnen Komponenten des entsprechenden Antriebsstrangs.

Wesentliche Komponenten eines Antriebsstrangs sind beispielsweise Motor, Motorkupplung, Bremssystem, Zahnradgetriebe, Antriebswellen, Antriebslager, Frequenzwandler etc. Sie stammen normalerweise aus diversen Ingenieurdisziplinen und können bei Sondermaschinen einen hohen Integrationsgrad aufweisen. Alternativ werden sie zu Modulen mit definierten Schnittstellen zusammengefasst und für unterschiedliche Anwendungen bedarfsgerecht zusammengesetzt.

Zur Erzielung eines höheren Automatisierungsgrades kann bei komplexeren Anwendungen eine Integration des Antriebsstranges einer Maschine in weitere Maschinenprozesse erforderlich sein. Bei Förderbandanlagen ist beispielsweise eine Integration in das übergeordnete Fördersystem wünschenswert, bei Windkraftanlagen die Integration in die Windparksteuerung, etc.

Darüber hinaus ist die Integration einer Betriebsdatenerfassung erforderlich. Eine Betriebsdatenerfassung teilt sich in technische Betriebsdaten und organisatorische Betriebsdaten auf. Die technischen Betriebsdaten werden oftmals mit dem Begriff SCADA-System (Supervisory Control and Data Acquisition System) umschrieben. Hierunter versteht man das Überwachen und Steuern technischer Prozesse mittels eines Computersystems. Die organisatorischen Betriebsdaten werden oft mit dem Begriff PPS-System (Produktionsplanungs- und Steuerungssystem) verbunden. Hierbei handelt es sich um ein Computerprogramm oder ein System aus Computerprogrammen, das den Anwender bei der Produktionsplanung und Produktionssteuerung unterstützt und die damit verbundene Datenverwaltung übernimmt. Ziel eines PPS-Systems ist die Realisierung kurzer Durchlaufzeiten, die Termineinhaltung, die Erzielung optimaler Bestandshöhen, die wirtschaftliche Nutzung der Betriebsmittel, etc. Beide Betriebsdatenerfassungsansätze können innerhalb einer Maschinenstruktur umgesetzt werden, die sowohl zentral als auch dezentral aufgebaut sein kann.

Insbesondere bei Maschinenanwendungen, die ohne Betriebsüberwachung durch Mitarbeiter oder ohne Möglichkeiten zur schnellen Erreichbarkeit betrieben werden müssen, oder aber bei Maschinen, die an höchst gefährdeten oder wirtschaftlich bedeutenden Prozessen teilnehmen, ist eine Verfügbarkeit der Betriebsfähigkeit der Maschine von großer Bedeutung. Bei diesen Maschinen werden zusätzlich CMS-Systeme (Condition Monitoring Systems) eingesetzt, die eine Zustandsüberwachung zur Aufgabe haben, oder weiterführend auch CDS-Systeme (Condition Diagnostic Systems), die eine Zustandsüberwachung inklusive Fehlerdiagnose zur Aufgabe haben. Mittels dieser CMS/CDS-Systeme soll die Betriebsführung der Maschine davor geschützt werden, in nicht vorhergesehene Schadenszustände zu fahren, die zu einem Ausfall der Maschine führen. Die aufkommenden Schäden sollen rechtzeitig gemeldet werden, damit Reparaturen rechtzeitig geplant werden können.

Eine allgemein anerkannte Auffassung ist es, dass durch ein Erkennen von Schäden eine Steuereinheit veranlasst werden kann, durch eine veränderte Steuerung der steuerbaren Maschinenkomponenten eine Verlängerung des Zeitraums bis zum endgültigen Ausfall der Maschine erreichen zu können, bzw. dass durch eine von vornherein modifizierte Betriebsführung und Regleransteuerung der Maschine eine erweiterte Betriebszeit der Maschine erreicht werden kann. Ziel ist eine Vermeidung von Ausfällen und einer Betriebslaufzeiterhöhung der Maschine bei der entsprechenden Anwendung.

Zu diesem Zweck muss eine Maschine mit deutlich mehr Sensoren ausgestattet werden, als sie es für die Betriebsführung oder Betriebsdatenerfassung alleine müsste. Darüber hinaus müssen die Sensorinformationen der erweiterten Betriebsdatenerfassung bewertet werden. Bei der Auswahl der Sensoren müssen in letzter Konsequenz alle beteiligten Maschinenkomponenten im Rahmen einer Risikoanalyse berücksichtigt werden. Zu diesen Maschinenkomponenten lassen sich zumindest die kraftführenden Elemente zählen, wie beispielsweise Wellen, Lager, Getriebe, Motor, Umrichter und Netzversorgung, aber auch Subsysteme wie Kühlung, Schmierölversorgung und Steuergeräte.

In letzter Konsequenz zählen auch die Überwachungssensoren zu den betriebsrelevanten Systemen und müssen ebenfalls auf ihre Betriebsfähigkeit hin überwacht werden. Im Rahmen dieses Informationsdreiecks aus PPS, SCADA und CMS-CDS lassen sich alle heute bekannten Informationsstrukturen von Maschinen einsortieren.

Zur Gewährleistung eines ordnungsgemäßen Betriebs einer Maschine muss also eine über die Maschinenkomponentengrenzen hinweg durchgängig funktionsfähige Maschinenstruktur erarbeitet werden. Die Wechselwirkungen der Maschinenkomponenten müssen zur sicheren Betriebsführung vollständig zusammengestellt und gemäß der dann später auszulegenden Steuerung berücksichtigt werden. Als zielführend wird hierzu bisher eine Simulation des Systems angesehen, die im Vorfeld entwicklungsbegleitend durchgeführt wird und einen Maschinenbauer vor neue Probleme stellt, welche sehr viel Zeit und Geld in Anspruch nehmen. Die Konstruktion eines Maschinensystems erfolgt in zwei Stufen. Zunächst werden die Eckwerte der Leistungsgrößen aufeinander abgestimmt und dann mittels der Maschinenkomponenten zu einem System zusammengesetzt, welches dann Systemeigenschaften innerhalb der dynamischen Betriebsführung und im Sinne einer Leistungskurve der Applikationsanforderung zu erfüllen hat. Dann erfolgt eine Steuerungs - und/oder Regelungsauslegung, bei der die Informationswege für die Betriebsdatenerfassung festgelegt werden. Neben den äußeren Anforderungen der Applikationen, welche die Betriebsführung vorgeben und welche in der Betriebsführung durch die Regler und Steuergrößen zu erreichen sind, kommt es zu inneren Wechselwirkungen zwischen den Maschinenkomponenten, die ebenfalls zu berücksichtigen sind.

Es besteht dann das Problem, dass diese Wechselwirkungen für alle betriebsrelevanten Anforderungen durchgängig berücksichtigt werden müssen, was aber in der Struktur der Maschinenkomponentenbeschaffung heute nur mittels formulierter Lastenhefte bewerkstelligt werden kann. Dieses Unterfangen wird zunehmend komplexer und benötigt einen hohen Aufwand und Kenntnisstand über Einzeleffekte aus den technischen Einzeldisziplinen des Maschinenbaus und der Elektrotechnik, Regelungstechnik, Schadensdiagnose, etc, um das Systemverhalten für eine Maschinensteuerung inklusive Schadensdiagnose und Schadensunterdrückung berücksichtigen zu können. Einen Großteil der Arbeit nimmt hierbei die Beurteilung der Schwingungsanregung ein. Auf das dynamische Verhalten des Schwingungssystems Antriebsstrangs nehmen als Anregungsfunktionen beispielsweise die Luftspaltmomente der Motoren, die Zahneintrittsstöße der Getriebestufen, die Einwirkung der mechanischen Bremsen, äußere Belastungen, die auf die Maschine einwirken, etc. Einfluss.

Die wichtigste Maßnahme der Schwingungsminderung im Allgemeinen ist die Verminderung der Erregerkräfte, die allerdings komponentenübergreifend bekannt sein müssen. Alle weiteren Maßnahmen zur Schwingungsminderung sind nur dann sinnvoll, wenn vorher die Ursache der Schwingungen, also die Erregung, weitestgehend reduziert worden ist. Es wird bei der Reduzierung der Erregerkräfte zwischen der Verhinderung und der Kompensation der Erregerkräfte unterschieden. Zu den Maßnahmen zur Verhinderung der Erregerkräfte zählt beispielsweise das Auswuchten durch Massenausgleich. Mit diesem Verfahren können nur drehzahlsynchrone Erregungsanteile aufgrund der Massenunwucht minimiert werden. Im Falle von Zahneingriffsfrequenzen bei Getrieben können beispielsweise eine Schrägverzahnung und geeignete Zahnkorrekturen zu einer Verminderung führen. Polwechselfrequenzen von Elektromaschinen können ebenfalls mit Stromsteuerungen oder mechanisch schräg gestellten Nuten verringert werden. Der Umrichter kann mit speziellen Filtern ausgestattet werden. Unter einer Kompensation der Erregerkräfte werden aktive Verfahren zur Erregungskompensation durch Krafteinleitung in die Komponente verstanden. Mit diesen Verfahren, die auch zur aktiven Schwingungsregelung gehören, können auch nicht-synchrone Erregungsanteile kompensiert werden.

Die Schwingungsminderung durch Veränderung von Systemeigenschaften, was auch als Verstimmen bezeichnet wird, kann beispielsweise durch eine Veränderung von Lagersteifigkeiten oder der äußeren Dämpfung erzielt werden. Hier können auch Kupplungen zwischen den Maschinenkomponenten verwendet werden, wie beispielsweise Elastomerlager, passive oder aktive hydraulische Elastomerlager oder dergleichen. Da eine optimale Schwingungsminderung für den gesamten Betriebsdrehzahlbereich in der Regel eine Anpassung der Steifigkeits- oder Dämpfungseigenschaften erfordert, werden in letzter Zeit vor allem aktive oder semi-aktive Verfahren erforscht, die eine solche Anpassungsfähigkeit ermöglichen. Zu den passiven Methoden des Verstimmens gehört das weit verbreitete Verfahren zur Erhöhung der Lagerdämpfung durch Verwendung von Quetsch-Öl-Dämpfern. Durch dynamische Zusatzsysteme, deren Eigenfrequenz auf eine kritische Eigenfrequenz des Maschinensystems abgestimmt ist, kann das Schwingungsverhalten in kritischen Resonanzen erheblich verbessert werden. Dafür müssen diese aber systemübergreifend bekannt sein, was zu einem erheblichen Aufwand bei der Erstauslegung und dem späteren Tausch von Komponenten führt.

Ausgehend von diesem Hintergrund ist es eine Aufgabe der vorliegenden Erfindung, ein Verfahren der eingangs genannten Art bereitzustellen, bei dem eine Synthetisierung von Maschinenkomponenten des Antriebsstrangs und damit die Ansteuerung bzw. Regelung der steuerbaren Maschinenkomponenten zur Erzielung eines ordnungsgemäßen Maschinenbetriebs sowie zur Integration des Antriebsstrangs in ein übergeordnetes System und/oder in ein PPS-, SCADA-, CMS- und/oder CDS-System einfach und zumindest teilweise automatisiert erfolgen kann.

Zur Lösung dieser Aufgabe schafft die vorliegende Erfindung ein Verfahren der eingangs genannten Art, das die Schritte aufweist: Ausstatten wenigstens eines Teils der nicht steuerbaren Maschinenkomponenten mit komponentenspezifischen Datenspeichern, auf denen jeweils konstruktionsbedingte technische Daten der nicht steuerbaren Maschinenkomponente gespeichert sind, die für die Steuerung einer oder mehrerer steuerbarer Maschinenkomponenten relevant sind; Übermitteln der auf den Datenspeichern gespeicherten Daten an die Steuereinheit und Steuern einer oder mehrerer steuerbarer Maschinenkomponenten unter Einsatz der Steuereinheit und unter Berücksichtigung der übermittelten Daten.

Aufgrund der heute zunehmend üblichen Ausrüstung einzelner Maschinenkomponenten mit Sensoren oder CMS-Einheiten, wie beispielsweise mit einer Lagerüberwachung, einer Getriebediagnoseeinheit oder einem einfachen RFID-Chip zur besseren Bauteilerkennung im Servicefall, ist es erfindungsgemäß überraschend einfach möglich, für jede nicht steuerbare Maschinenkomponente einen Datensatz zu hinterlegen, der innerhalb der Betriebsführung und im Rahmen einer daraufhin erweiterten Betriebsdatenerfassung eine grundsätzlich automatische Parametrisierung der steuerbaren (aktiven) Maschinenkomponenten im Sinne der nicht steuerbaren (passiven) Maschinenkomponenten ermöglicht. Die ohnehin konstruktiv gegebenen Eckdaten der passiven Maschinenkomponenten werden erfindungsgemäß in einem komponentenspezifischen Datenspeicher abgelegt und können dann bei der Zusammenstellung des Antriebsstrangs an die Steuereinheit weitergeleitet bzw. von dieser ausgelesen und von dieser daraufhin beim Parametrisieren bzw. Ansteuern der aktiven Maschinenkomponenten berücksichtigt werden. Hierbei kann ein geeignetes Datenmanagement zum Einsatz kommen, wie beispielsweise ein Bussystem, CAN, I²C, Ethernet, RS232 oder dergleichen, sowie RFID oder andere Leseformate. Die Folge ist eine sehr genaue, zumindest teilweise automatisierte Synthetisierung unter Berücksichtigung der konstruktionsbedingten technischen Daten der passiven Maschinenkomponenten. Ein weiterer Vorteil besteht darin, dass einzelne passive Maschinenkomponenten auch ausgetauscht werden können, ohne dass dies einen großen Aufwand für die erneute Synthetisierung der Maschinenkomponenten zur Folge hat.

Bevorzugt wird bei dem Verfahren auch zumindest ein Teil der steuerbaren Maschinenkomponenten mit komponentenspezifischen Datenspeichern ausgestattet, auf denen jeweils zumindest ein Parametrisierungsbereich gespeichert ist, in dessen Grenzen die entsprechende steuerbare Maschinenkomponente steuerbar ist, wobei die auf den Datenspeichern der steuerbaren Maschinenkomponenten gespeicherten Daten an die Steuereinheit übermittelt werden und die Steuerung der steuerbaren Maschinenkomponenten unter Berücksichtigung dieser Daten erfolgt. Entsprechend können die Daten aller zu synthetisierenden Maschinenkomponenten automatisch für die Steuereinheit zur weiteren Verwendung bereitgestellt werden.

Als konstruktionsbedingte technische Daten sind bevorzugt Grenztemperaturen und/oder Grenzdrehzahlen und/oder Grenzleistungen und/oder Trägheitsmomente und/oder Federsteifigkeiten und/oder Dämpfungskonstanten und/oder Lastverweildauerkurven (LDD) und/oder RFC-Matrizen (Rain-Flow-Count-Matrizen) und/oder Campell-Diagramme und/oder Sicherheitsbeiwerte einer Maschinenkomponente gespeichert, was nachfolgend im Einzelnen noch näher erläutert wird.

Gemäß einer Ausgestaltung des erfindungsgemäßen Verfahrens wird zumindest ein Ist-Werte einer Maschinenkomponente erfassender Sensor eingesetzt, wobei eine Regelung zumindest einer steuerbaren Maschinenkomponente unter Berücksichtigung der von dem zumindest einen Sensor erfassten Ist-Werte erfolgt. Mit Sensoren sind eine automatische Zustandsüberwachung und eine auf den Überwachungsdaten basierende Fehlerdiagnose (CMS/CDS) realisierbar.

Vorteilhaft werden die von dem zumindest einen Sensor erfassten Ist-Werte und auf den Datenspeichern hinterlegte technische Daten zu Analysezwecken gespeichert, insbesondere zur Bestimmung des Auslastungsgrades der Maschine und/oder einzelner Maschinenkomponenten und/oder zur Weiterverarbeitung in einem CMS/CDS-System.

Bevorzugt wird zudem die Anzahl von Lastüberschreitungen einzelner Maschinenkomponenten erfasst, gespeichert und ausgewertet.

Gemäß einer Ausgestaltung der vorliegenden Erfindung ist eine der nicht steuerbaren Maschinenkomponenten ein Getriebe, wobei auf dem Datenspeicher des Getriebes als konstruktionsbedingte technische Daten bevorzugt Zahneingriffsfrequenzen und/oder Überrollfrequenzen und/oder das Zahnflankenspiel und/oder das Verdrehzahnflankenspiel gespeichert ist/sind.

Ferner schafft die vorliegende Erfindung zur Lösung der eingangs genannten Aufgabe eine Maschinenkomponente eines Antriebsstrangs, die nicht über eine Steuereinheit steuerbar ist, also eine passive Maschinenkomponente der zuvor beschriebenen Art, und einen auslesbaren Datenspeicher aufweist, auf dem konstruktionsbedingte technische Daten der Maschinenkomponente gespeichert sind, die für die Steuerung einer steuerbaren Maschinenkomponente eines Antriebsstrangs einer Maschine von Relevanz sind.

Bei der Maschinenkomponente handelt es sich bevorzugt um ein Getriebe, ein Lager, eine Kupplung oder eine Bremse.

Als konstruktionsbedingte technische Daten sind vorteilhaft Grenztemperaturen und/oder Grenzdrehzahlen und/oder Grenzleistungen und/oder Trägheitsmomente und/oder Federsteifigkeiten und/oder Dämpfungskonstanten und/oder Lastverweildauerkurven (LDD) und/oder RFC-Matrizen und/oder Campell-Diagramme und/oder Sicherheitsbeiwerte einer Maschinenkomponente auf dem Datenspeicher gespeichert.

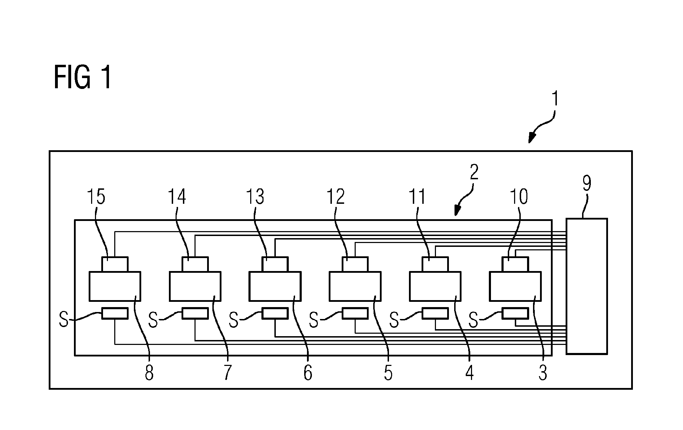

Die vorliegende Erfindung wird im Folgenden anhand eines Ausführungsbeispiels unter Bezugnahme auf die beiliegende Zeichnung näher erörtert. Darin zeigt
- Figur 1: eine schematische Darstellung einer Maschine gemäß einer Ausführungsform der vorliegenden Erfindung;
- Figur 2: ein Diagramm, das die Ordnungsverfolgung für die Ordnungen 1 bis 20 zeigt; und
- Figur 3: ein weiteres Diagramm, das die kumulierte Summe zur Darstellung der Ordnungsverfolgung zeigt.

Die Maschine 1, bei der es sich um eine beliebige Maschine handeln kann, weist einen Antriebsstrang 2 auf, über den ein nicht näher dargestellter Endeffektor angetrieben werden kann, beispielsweise in Form einer Zementmühle, eines Bandantriebs, einer Mahlanlage, einer Walze, einer Presse, eines Förderbands oder dergleichen. Der Antriebsstrang 2 umfasst mehrere Maschinenkomponenten 3-8, die aus einzelnen Maschinenelementen oder aus Modulen bestehen. Bei den Maschinenkomponenten 3 und 4 handelt es sich um aktive Maschinenkomponenten, die über eine Steuereinheit 9 steuerbar sind, wie beispielsweise eine Elektromaschine, ein Umrichter oder dergleichen, um nur einige Beispiele zu nennen. Die Maschinenkomponenten 5-8 sind nicht steuerbare passive Maschinenkomponenten, zum Beispiel in Form eines Lagers, eines Getriebes, einer Kupplung, einer Bremse, etc.

Ferner umfasst der Antriebsstrang 2 mehrere Sensoren S, die vorbestimmte Parameter der Maschinenkomponenten 3-8 überwachen und zwecks Auswertung an die Steuereinheit 9 übermitteln.

Anders als bei herkömmlichen Antriebssträngen ist jede Maschinenkomponente 3-8 des erfindungsgemäßen Antriebsstrangs 2 mit einem komponentenspezifischen Datenspeicher 10-15 versehen, auf dem technische Daten der jeweiligen Maschinenkomponente 3-8 gespeichert sind, die an die Steuereinheit 9 übermittelbar sind. Hierbei handelt es sich beispielsweise um Grenztemperaturen und/oder Grenzdrehzahlen und/oder Grenzleistungen und/oder Trägheitsmomente und/oder Federsteifigkeiten und/oder Dämpfungskonstanten und/oder Lastverweildauerkurven (LDD) und/oder RFC-Matrizen und/oder Campell-Diagramme und/oder Sicherheitsbeiwerte der jeweiligen Maschinenkomponenten 3-8. Darüber hinaus sind als konstruktionsbedingte technische Daten für ein Lager auf dem zugeordneten Datenspeicher beispielsweise Mindestdrehzahl, Mindestlast und Grenzbeschleunigungen, für ein Getriebe Zahneingriffsfrequenzen, Zahnflankenspiel und Verdrehzahnflankenspiel, für eine Kupplung die Ungleichförmigkeit der Kardanwelle, für eine Bremse die thermische Grenze sowie das minimale und/oder maximale Bremsprofil, für eine Elektromaschine Polzahl, Polpaarzahl, Rotorgrundwelle, Rotoroberwelle, Statorgrundwelle, Statoroberwelle, Nutzahlen, Wicklungsstrangzahl, Läuferstrangzahl und Stabzahl, und für einen Umrichter Taktfrequenz, Schaltflanken, Oberwellen, Oberschwingung, Übertragungsfunktion, Grenzfrequenzen, z.B. von Filtern etc. hinterlegt, wobei diese Aufzählung nicht als abschließend zu verstehen ist. Auf den Datenspeichern der aktiven Maschinenkomponenten 3 und 4 sind ferner die Parametrisierungsbereiche gespeichert, in deren Grenzen die jeweilige Maschinenkomponente 3 bzw. 4 steuerbar ist.

Nach Übermittlung dieser Daten an die Steuereinheit 9 kann diese die aktiven Maschinenkomponenten 3 und 4 unter Berücksichtung der Anforderungsprofile sämtlicher Maschinenkomponenten 3-8 des Antriebsstrangs 2 voll- oder teilautomatisiert parametrisieren, so dass gewährleistet werden kann, dass Auslegung, Inbetriebnahme und Betrieb des Antriebsstrangs 2 ordnungsgemäß sind. Darüber hinaus werden natürlich auch die Grenzen derjenigen Parameter der einzelnen Maschinenkomponenten 3-8, die von den Sensoren S überwacht werden, an die Steuereinheit 9 übermittelt, so dass auch hier eine umständliche Einrichtung der entsprechenden CMS/CDS-Systeme nicht erforderlich ist. Ein weiterer Vorteil besteht darin, dass sich einzelne Maschinenkomponenten 3-8 oder Teile derselben problemlos austauschen lassen. Die komponentenspezifischen Daten der Neuteile müssen lediglich ausgelesen und an die Steuereinheit 9 übermittelt werden, woraufhin diese automatisch ggf. erforderliche Änderungen des Systems vornimmt.

Nachfolgend werden die einzelnen Daten, die auf den komponentenspezifischen Datenspeichern 10-15 hinterlegt werden können, zum besseren Verständnis näher erläutert.

Die dynamische Belastung des Antriebsstrangs 2 setzt sich grundsätzlich aus drei Teilen zusammen, und zwar aus den zeitlich veränderlichen technologischen Belastungen, den kinetostatischen Belastungen aus den Starrkörperbewegungen (Primärbewegungen) und den vibrodynamischen Belastungen aus den Schwingungen der Struktur (Sekundärbewegungen).

Die Daten, die erfindungsgemäß auf den Datenspeichern 10-15 der einzelnen Maschinenkomponenten 3-8 hinterlegt werden, umfassen die konstruktiven Eckwerte aus den zeitlich veränderlichen technologischen Belastungen und den kinetostatischen Belastungen aus den Starrkörperbewegungen, die als feste Daten der einzelnen Maschinenkomponenten 3-8 zu verstehen sind, aber darüber hinaus bevorzugt auch relevante Daten wie Sicherheitsbeiwerte, für die Betriebsfestigkeitsberechnung angesetzte Lastverweildauerkurven, Rain-Flow-Count-Matrizen, Campell-Diagramme oder dergleichen. Nur mittels dieser komponentenspezifischen technischen Daten ist es für die Steuereinheit 9 möglich, die drei Gruppen der oben genannten dynamischen Belastungen durch entsprechende Parametrisierung der aktiven Maschinenkomponenten 3 und 4 unterhalb der kritischen Grenzwerte zu halten.

Es sind für alle Maschinenkomponenten 3-8 ferner die Leistungs-, Drehzahl-, Drehmoment- und Kraftflussgrenzen zu berücksichtigen. Diese spiegeln sich bei den aktiven Maschinenkomponenten 3 und 4 (Elektromaschine und Umrichter) zusätzlich im Strom, in der Spannungslage, in der Phasenlage oder in der Schaltfrequenz wieder. Auch diese sind zu berücksichtigen. Die thermische Grenze aufgrund des Leistungsflusses mag für die Maschinenkomponenten 3-8 jeweils eine andere sein, die zu anderen Betriebszuständen erreicht werden könnten. Die jeweilige limitierende Größe einer Datenklasse limitiert dabei letztendlich die Betriebsführung in der Steuereinheit 9. So wird erfindungsgemäß die thermisch am meisten belastete Maschinenkomponente 3-8 als leistungslimitierend für den gesamten Antriebsstrang 2 angesehen, ohne dass dies explizit in der Steuereinheit 9 paramaterisiert werden muss, da die in den Datenspeichern 10-15 gespeicherten Daten in einfacher Art und Weise an die Steuereinheit 9 übermittelt werden.

Als weitere Systemebene kann das Schwingungs- und Geräuschverhalten genannt werden (Sekundärbewegungen), welches ebenfalls als stark beeinflusst durch die einzelnen Maschinenkomponenten 3-8 angesehen und abhängig von den Betriebsbedingungen bzw. von der Drehzahl angeregt werden kann.

Die mechanischen Strukturen der Maschinenkomponenten 3-8 schwingen grundsätzlich bei ihren Eigenfrequenzen. Aus dem Spektrum der anregenden Frequenzen nutzt die mechanische Struktur nur die Anteile aus, die auch mit Eigenfrequenzen der jeweiligen Struktur übereinstimmen. Diese können ohne vorherigen Datenaustausch oder vorherige Simulation unvorhergesehen über Komponenten hinweg aufgebracht werden. Weiterhin können elektromechanische Effekte als Ursache der Schwingung in mechanischen Komponenten auftreten. Beispielsweise kann sich die Taktrate eines Umrichters in einer Eigenschwingung einer Maschinenkomponente 3-8 wieder finden. Besonders gut lässt sich dies bei rotierenden Maschinen anhand eines sogenannten Campell-Diagramms oder Spektogramms verdeutlichen, bei dem die Drehzahlordnungen beispielsweise der Welle gemäß der Drehgeschwindigkeit gegenüber den Frequenzmoden der Bauteile aufgetragen werden. Schnittpunkte können, müssen aber nicht zu einer Resonanz führen, da zum Beispiel die Dämpfung nicht berücksichtigt ist.

Um das Schwingungsverhalten von Systemen und Strukturen messtechnisch zu untersuchen, gibt es mehrere Möglichkeiten. Bekannt sind insbesondere die Anregung mit einem Impuls (Hammerschlag) oder einer harmonischen Schwingung (Sinus). Letzte Variante kann auch mit zeitlich veränderlicher Frequenz als Anregungssignal (Sinus-Sweep/-Chirp) durchgeführt werden. Treffen Erregerfrequenz und Eigenfrequenz des Systems zusammen, antwortet das System mit einer Amplitudenerhöhung. Im Falle des Systems Zahnrad und Welle kommt im Betrieb die Anregung aus dem Systemteil Getriebe dann selber. Durch die Zahneingriffsfrequenz wird das Systemteil Welle oder Gehäuse zur Schwingung angeregt. Wird nun für die einzelne Maschinenkomponente 3-8 eine zeitlich gleitende FFT (Fast Fourier Transformation) mit relativ kleinem Zeitfenster durchgeführt, bekommt man zu jedem Zeitpunkt ein Frequenzspektrum, das man auf der X-Achse eines Diagramms aufträgt. Auf der Y-Achse wird die mittlere Drehzahl während des FFT-Fensters aufgetragen. Als Z-Achse dient die Amplitude des Signals, wobei meistens auf eine 3D-Darstellung verzichtet wird und die Amplitude farbkodiert abgebildet wird. Dadurch erscheint ebenfalls eine Struktur aufgrund der realen Systemmessung: die Nullpunktstrahlen sind die Drehzahlharmonischen, senkrechte Linien sind die Systemeigenfrequenzen, gekrümmte Linien sind ein Zeichen für Nichtlinearitäten oder Zeitinvarianzen gegenüber der theoretischen Ausführung des Campell-Diagramms. Wo sich Systemeigenfrequenzen und Drehzahlharmonische schneiden, kommt es zu deutlichen Resonanzeffekten, worauf das System mit einer großen Amplitude antwortet.

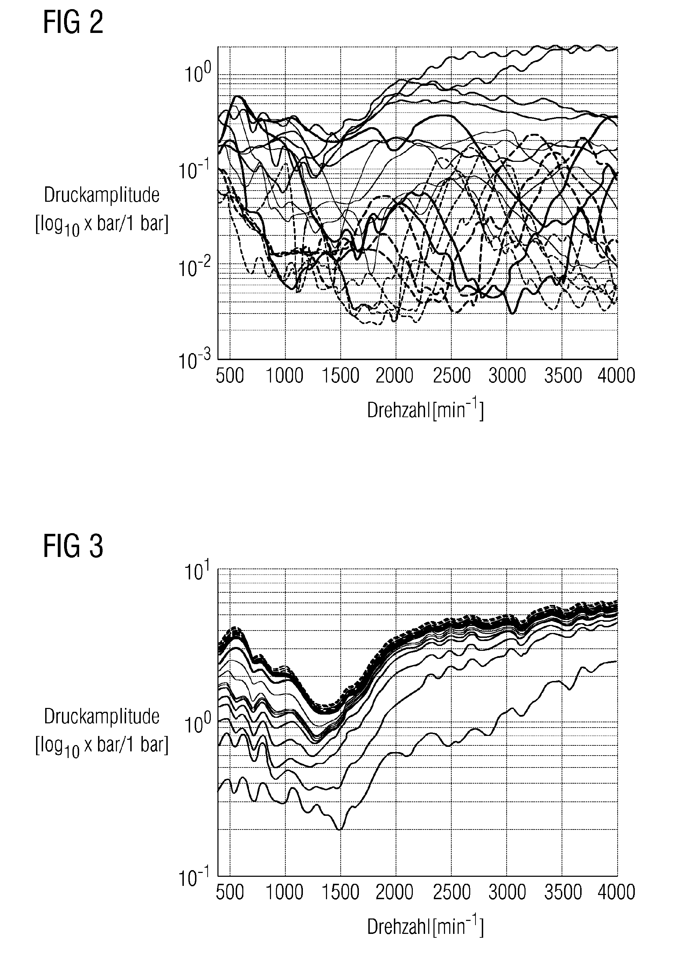

Ausgehend von dem realen Campell-Diagramm lässt sich einfach eine Ordnungsverfolgung ableiten. Hierzu lässt man einen Laufindex entlang der Ordnungsstrahlen laufen und notiert die dabei auftretenden Amplituden, getrennt für jede Ordnung. Die resultierende Darstellung zeigt Figur 2, wobei die Farbkodierung nicht dargestellt ist. Hier werden die 1. bis 20. Ordnung betrachtet.

Diese Ordnungsverfolgung kann jetzt kumuliert werden. Wie in Figur 2 gezeigt, wird durch die große Anzahl der relevanten Ordnungen die übliche gleichzeitige Darstellung der Ordnungen sehr unübersichtlich. Dies kann durch die Darstellung der kumulierten Ordnungssumme verringert werden. Hierbei wird statt der n-ten Ordnung die Summe der Ordnungen 1 bis n aufgetragen, wie Figur 3 zeigt, wobei auch hier die Farbkodierung nicht gezeigt ist.

Die Darstellung der kumulierten Summe ermöglicht den einfachen Vergleich einiger Konfigurationen, ebenso wie mit Hilfe des Campell-Diagramms. In einer Ausgestaltung der Erfindung ist auf jedem Datenspeicher 10-15 das Campell-Diagramm oder die kumulierte Summe der Ordnungen der entsprechenden Maschinenkomponente 3-8 gespeichert. Auch diese Daten werden automatisch an die Steuereinheit 9 übermittelt, in der dann eine Aufaddierung der nicht gewollten Betriebszustände zur Betriebsführungsparameterisierung durchgeführt wird. Gleiches kann mit Daten bezüglich der Steifigkeit der Maschinenkomponenten 3-8 oder bezüglich deren Trägheitsmoment erfolgen.

Die Steuereinheit 9 erhält damit nicht nur die sensorisch innerhalb jeder Maschinenkomponente 3-8 erfassten Daten der Sensoren S bezogen auf die Betriebsdaten- und/oder CMS-CDS-Datenerfassung, sondern gleichzeitig auch die komponentenspezifischen Grenzwerte.

Auf diese Art und Weise wird die Parameterisierung des modular aufgebauten Antriebsstrangs 2 deutlich vereinfacht. Insbesondere die passiven Maschinenkomponenten 5-8, welche bislang nur über ein CMS-CDS-System verfügten, können auf die erfindungsgemäße Weise in die Maschinensteuerung eingebunden werden.

Ein Austausch von Maschinenkomponenten 3-8 kann nicht zu einem irrtümlichen Überlasten von veränderten Maschinenkomponenten führen, wie es ohne den erfindungsgemäßen Datenaustausch möglich wäre.

Das bisherige Parameterisieren von CMS/CDS-Systemen ist deutlich vereinfacht, wenn über die Datenspeicher 10-15 die Grenzwerte der von den Sensoren S überwachten Parameter der Maschinenkomponenten 3-8 mitgeliefert werden.

Insbesondere sind die Signaturen für Getriebeverzahnungen und Lagerstellen an Getrieben und Wellen ursachenbedingt rein abhängig von ihren Geometriezusammenhängen. Diese können schon bei der Konstruktion der Mechanik gemäß bekannter Formen festgelegt und erfindungsgemäß dem CMS/CDS-System über die Datenspeicher 10-15 zur Verfügung gestellt werden.

Ein Tausch von Maschinenkomponenten 3-8, wie beispielsweise ein Getriebeaustausch, kann ohne Bedenken erfolgen, da das CMS/CDS-System automatisch die neuen Daten erhält.

Die Datensätze über Erregerfrequenzen, wie Überrollfrequenzen, Zahneingriffsfrequenzen, etc. können für Lager, Wellen, und Verzahnungen gleichermaßen berechnet oder anhand der Maschinenkomponente 3-8 gemessen und als Datensatz hinterlegt werden.

Unter bestimmten Konstellationen von Umrichter und Maschine bzw. in bestimmten Betriebspunkten können unerwünschte Effekte im Maschinenverhalten auftreten, wie eine unzulässige Erwärmung der Wicklungen und des Blechpakets, Pendelmomente, eine verstärkte Schwingungsentwicklung bzw. Schallemission sowie Wellenspannung und Lagerströme.

Mit Ausnahme der Wellenspannung und Lagerströme ist hier ursächlich darauf zu schließen, dass diese unerwünschten Effekte im Maschinenverhalten auf Oberwellenerscheinungen der Elektromaschine zurückzuführen sind. Vereinfacht kann beispielsweise für die magnetische Geräuschentwicklung der Elektromaschine das Grundfeld der Umrichterspeisung betrachtet werden. Dieses kann aus den Auswirkungen der Oberschwingungen von Umrichtern auf ein Oberschwingungs-Ersatzschaubild der Maschine abgeleitet werden. Auch hier können diese pro Maschinenkomponente angegeben werden.

Neben der Gruppe der direkten Maschinenkomponentenbetriebsdaten und deren konstruktiv definierten Grenzwerte (Drehzahl, Drehzahlgrenze, Drehmoment, maximale Last, Lagertemperatur und Lagermaximaltemperatur etc.) und der indirekten Maschinenkomponentenbetriebsdaten (Campell-Diagramm, angesetzte LDD, angesetzte RFC) können auch spezifische Größen für Regler hinterlegt werden. Hier können maximale Beschleunigungen oder einfache Ablaufmuster für die Maschine hinterlegt werden (z.B. Servicestellungen, Parkstellungen, Trudelgrenzen), die spezifisch für nur eine Maschinenkomponente 3-8 sein können und im Normalfall explizit in der Steuereinheit 9 hinterlegt werden müssten.

Da die Maschinenkomponenten 3-8 aber über die Sensoren S und den jeweiligen Datenspeicher 10-15 verfügen, kann sich die Steuereinheit 9 erfindungsgemäß über das Einlesen der komponentenspezifischen Daten selbst parametrisieren bzw. es wird für einen Anwender stark vereinfacht, da er die Daten vor Ort gezielt auslesen kann.

Die Daten können bezogen auf die Art der Maschinenkomponente 3-8 unterschiedlich sein, sobald es sich nicht um die grundsätzlichen Konstruktionseckdaten handelt. Während die Grenzdrehzahlen, die Grenzleistung, Trägheitsmomente, Federsteifigkeiten und Dämpfungskonstanten und die angesetzte LDD oder RFC und auch z.B. ein Campell-Diagramm oder eine Übertragungsfunktion in erster Linie für alle Maschinenkomponenten 3-8 als Datensatz hinterlegt werden können, so gibt es auch Maschinenkomponentendaten, die ausschließlich für spezielle Maschinenkomponenten 3-8 hinterlegt werden. Beispiele solcher Daten für Lager, Getriebe, Kupplungen, Bremsen, Elektromaschinen und Umrichter wurden eingangs bereits genannt, weshalb an dieser Stelle auf eine Wiederholung verzichtet wird.

Im Übrigen bieten sich Beschleunigungen (Stöße), Lastumkehr, lastumkehrbedingte Schwingungsspiele sowie jede Form von Grenzwertüberschreitung an Einzelkomponentengrenzwerten als sensorisch zu erfassende Sondereffekte an.

Aufgrund der komponentenbezogenen Datenbereitstellung bzw. auch Datenkommunikation kann eine vereinfachte passive und aktive Betriebsführung erreicht werden.

Unter aktiver Schwingungsdämpfung werden im Allgemeinen Verfahren zur Schwingungsminderung verstanden, die auf einem klassischen Regelkreis basieren (Feedback-Regelungen, Closed-Loop-Control). Dafür werden geeignete Sensoren und Stellglieder benötigt, wie sie hier auf Komponentenniveau vorausgesetzt werden. Die eingesetzten Stellglieder können dabei direkt auf den drehenden Rotor oder auf eine Lagerstelle einwirken, aber es kann auch die Elektromaschine als eine solche angesehen werden. Hier kann erfindungsgemäß in stark vereinfachter Art und Weise auf ein System zurückgegriffen werden, welches die betriebskritischen Drehzahlen oder Drehmomente automatisch von seinen Maschinenkomponenten 3-8 bereitgestellt bekommt und dementsprechend die Betriebsführung aufgrund der Daten (passiv) steuern kann und aufgrund der Sensorwerte zusätzlich (aktiv) regeln kann.

In einer Ausführungsform der Erfindung bestehen die Datenspeicher 10-15 aus einer messwertverarbeitungsfähigen Rechnereinheit (FPGA-Chip, Mikrocontroller, Industrie-PC), die neben der Datenspeicherung auch eine geeignete Messwertverarbeitung und Speicherung gewährleisten kann. Für dieselben Zwecke kann aber auch eine CMS/CDS-Einheit verwendet werden.

In einer weiteren Ausgestaltung der Erfindung können die Betriebsdaten der Sensoren S und die hinterlegten Daten der Maschinenkomponenten 3-8 dazu verwendet werden, eine gegenüber den Auslegungsdaten angesetzte Belastungssummierung auszurechnen. So können die Grenzwertübertretungen bezogen auf Last, Drehmoment, Drehzahl oder Schwingung gespeichert werden. Es können die gemessenen LDD- oder RFC-Werte bezogen auf jede einzelne Maschinenkomponente 3-8 gegen die konstruktiv angesetzten gerechnet werden. Damit erfolgt ein konstantes Messen der belastungsrelevanten Größen, die dann als Ist-Daten neben den initialen Soll-Datensätzen abgelegt werden.

In einer weiteren Ausgestaltung der Erfindung können die Daten zu Servicezwecken ausgelesen werden bzw. beim Tausch einzelner Teile innerhalb einer Maschinenkomponente 3-8 wiederum in dem zugeordneten Datenspeicher 10-15 hinterlegt werden, ggf. ergänzt um weitere Daten.

In geeigneter Art und Weise lässt sich der Soll-Ist-Vergleich der für die Lebensdauerauslegung der Komponente verwendeten Datensätze (RFC, LDD, Lastspielgrenzen) zur Planung des Serviceeinsatzes verwenden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Auslegung und/oder zur Inbetriebnahme und/oder zum Betreiben eines Antriebsstrangs (2) einer Maschine (1), der mittels einer Steuereinheit (9) steuerbare Maschinenkomponenten (3, 4) und nicht steuerbare Maschinenkomponenten (5-8) aufweist, wobei das Verfahren die Schritte aufweist:
- Ausstatten wenigstens eines Teils der nicht steuerbaren Maschinenkomponenten (5-8) mit komponentenspezifischen Datenspeichern (12-15), auf denen jeweils konstruktionsbedingte technische Daten der nicht steuerbaren Maschinenkomponente (5-8) gespeichert sind, die für die Steuerung einer oder mehrerer steuerbarer Maschinenkomponenten (3, 4) relevant sind;
- Übermitteln der auf den Datenspeichern (12-15) gespeicherten Daten an die Steuereinheit (9) und
- Steuern einer oder mehrerer steuerbarer Maschinenkomponenten (3, 4) unter Einsatz der Steuereinheit (9) und unter Berücksichtigung der übermittelten Daten.

2. Verfahren nach Anspruch 1, bei dem zumindest ein Teil der steuerbaren Maschinenkomponenten (3, 4) mit komponentenspezifischen Datenspeichern (10) ausgestattet wird, auf denen jeweils zumindest ein Parametrisierungsbereich gespeichert ist, in dessen Grenzen die entsprechende steuerbare Maschinenkomponente (3, 4) steuerbar ist, wobei die auf den Datenspeichern (10, 11) der steuerbaren Maschinenkomponenten (3, 4) gespeicherten Daten an die Steuereinheit (9) übermittelt werden und die Steuerung der steuerbaren Maschinenkomponenten (3, 4) unter Berücksichtigung dieser Daten erfolgt.

3. Verfahren nach einem der vorhergehenden Ansprüche, bei dem auf den Datenspeichern (10-15) als konstruktionsbedingte technische Daten Grenztemperaturen und/oder Grenzdrehzahlen und/oder Grenzleistungen und/oder Trägheitsmomente und/oder Federsteifigkeiten und/oder Dämpfungskonstanten und/oder Lastverweildauerkurven (LDD) und/oder RFC-Matrizen und/oder Campell-Diagramme und/oder Sicherheitsbeiwerte einer Maschinenkomponente (3-8) gespeichert sind.

4. Verfahren nach einem der vorhergehenden Ansprüche, bei dem zumindest ein Ist-Werte einer Maschinenkomponente (3-8) erfassender Sensor (S) eingesetzt wird, wobei eine Regelung zumindest einer steuerbaren Maschinenkomponente (3, 4) unter Berücksichtigung der von dem zumindest einen Sensor (S) erfassten Ist-Werte erfolgt.

5. Verfahren nach Anspruch 4, bei dem die von dem zumindest einen Sensor (S) erfassten Ist-Werte und auf den Datenspeichern (10-15) hinterlegte technische Daten zu Analysezwecken gespeichert werden, insbesondere zur Bestimmung des Auslastungsgrades der Maschine und/oder einzelner Maschinenkomponenten und/oder zur Weiterverarbeitung in einem CMS/CDS-System.

6. Verfahren nach einem der vorhergehenden Ansprüche, bei dem die Anzahl von Lastüberschreitungen einzelner Maschinenkomponenten (3-8) erfasst, gespeichert und ausgewertet wird.

7. Verfahren nach einem der vorhergehenden Ansprüche, bei dem eine der nicht steuerbaren Maschinenkomponenten (5-8) ein Getriebe ist.

8. Verfahren nach Anspruch 7, bei dem auf dem Datenspeicher des Getriebes als konstruktionsbedingte technische Daten Zahneingriffsfrequenzen und/oder Überrollfrequenzen und/oder das Zahnflankenspiel und/oder das Verdrehzahnflankenspiel gespeichert ist/sind.

9. Maschinenkomponente (5-8) eines Antriebsstrangs (2), die nicht über eine Steuereinheit (9) steuerbar ist und einen auslesbaren Datenspeicher (12-15) aufweist, auf dem konstruktionsbedingte technische Daten der Maschinenkomponente (5-8) gespeichert sind, die für die Steuerung einer steuerbaren Maschinenkomponente (3, 4) eines Antriebsstrangs (2) einer Maschine (1) von Relevanz sind.

10. Maschinenkomponente (5-8) nach Anspruch 9, **dadurch gekennzeichnet, dass** diese ein Getriebe, ein Lager, eine Kupplung oder eine Bremse ist.

11. Maschinenkomponente (5-8) nach Anspruch 9 oder 10, **dadurch gekennzeichnet, dass** als konstruktionsbedingte technische Daten Grenztemperaturen und/oder Grenzdrehzahlen und/oder Grenzleistungen und/oder Trägheitsmomente und/oder Federsteifigkeiten und/oder Dämpfungskonstanten und/oder Lastverweildauerkurven (LDD) und/oder RFC-Matrizen und/oder Campell-Diagramme und/oder Sicherheitsbeiwerte einer Maschinenkomponente auf dem Datenspeicher (12-15) gespeichert sind.
